# EUROPEAN PATENT APPLICATION

(11) **EP 3 751 232 A1**
(43) Date of publication of application: **16.12.2020**
(21) Application number: 20151313.2
(22) Date of filing: 10.01.2020
(51) Int. Cl.: G01C 19/574

(54) **IN-PLANE NON-DEGENERATE CORIOLIS VIBRATORY GYROSCOPE**

(30) Priority: 11.03.2019 US 201916298879
(71) Applicant: Honeywell International Inc., Morris Plains, NJ 07950 (US)
(72) Inventor: ENDEAN, Daniel, Morris Plains, NJ New Jersey 07950 (US)
(74) Representative: Haseltine Lake Kempner LLP

(57) **Abstract**

A gyroscope device comprising an in-plane vibratory structure comprises an outer proof mass including first and second proof mass portions, and an inner proof mass interposed between the first and second proof mass portions. A first set of drive combs is on the outer proof mass, and a second set of drive combs is on the inner proof mass. A first set of sense electrodes is above each of the proof masses, and a second set of sense electrodes is below each of the proof masses. The drive combs cause the proof masses to vibrate along a drive axis in an anti-phase mode. The sense electrodes sense motions of the proof masses along a sense axis perpendicular to the drive axis. The orientation of a measurement axis relative to a plane of the proof masses is such that the measurement axis is parallel to the plane of the proof masses.

## Description

### BACKGROUND

Certain navigational applications have a need for high precision gyroscopes. For example, Micro-Electro-Mechanical Systems (MEMS) gyroscopes may be capable of providing high precision measurements. However, certain MEMS gyroscopes may be subject to bias errors, where the bias errors may be represented by a non-zero y-intercept of the plot of output signal vs. input rotational rate. A non-zero sensor bias may directly affect the navigation algorithms that rely on inertial sensing data. For instance, a non-zero bias may cause inertial sensors to indicate that an associated system is rotating when the system is actually stationary; the bias errors may lead to a navigation solution error that increases cubically with time. The bias errors may negatively affect the operation of inertial sensors used in Global Positioning System (GPS) redundant airplane navigation and gyrocompassing (using the earth's rotation rate to locate the North Pole), where the GPS redundant airplane and gyrocompassing applications rely on inertial sensors with very low output biases.

One example of a MEMS gyroscope that is susceptible to bias errors is a tuning fork gyroscope. A tuning fork gyroscope includes two proof masses that vibrate in an anti-phase mode with each other (driven axis). The tuning fork gyroscope measures rotation through the Coriolis effect, which generates a force that is perpendicular to both the axis of rotation (input axis) and the velocity of the proof mass. Since the proof masses are driven in an anti-phase mode, when rotation is applied, the proof masses respond by moving in anti-phase along the axis of the Coriolis force (sense axis). The motion of the proof masses occurs at the drive frequency, where the drive frequency is the resonant frequency of the proof masses in the driven axis.

The bias error in the tuning fork gyroscope occurs due to vibratory rotation motion about the input axis at the driven frequency. The vibratory rotation motion causes the proof masses to move in the sense axis of the gyroscope at the driven frequency and generates a bias error signal. This vibratory rotation motion can occur through several mechanisms. One exemplary mechanism is an excitation of rotational vibration in the circuit board that controls the gyroscope. In this case, an imbalance in the driven motion of the sensor imparts force onto the circuit board, which in turn generates a rotational vibration.

### SUMMARY

A gyroscope device comprises an in-plane vibratory structure comprising an outer proof mass including a first proof mass portion and a second proof mass portion, and an inner proof mass interposed between the first proof mass portion and the second proof mass portion. A first set of drive combs is positioned on the outer proof mass, and a second set of drive combs is positioned on the inner proof mass. A first set of sense electrodes is located above each of the outer proof mass and the inner proof mass, and a second set of sense electrodes is located below each of the outer proof mass and the inner proof mass. The first and second sets of drive combs are configured to cause the outer proof mass and the inner proof mass to vibrate along a drive axis in an anti-phase mode with respect each other. The first and second sets of sense electrodes are configured to sense motions of the outer proof mass and the inner proof mass along a sense axis that is perpendicular to the drive axis. The orientation of a measurement axis relative to a plane of the outer and inner proof masses is such that the measurement axis is parallel to the plane of the outer and inner proof masses.

### DRAWINGS

Understanding that the drawings depict only exemplary embodiments and are not therefore to be considered limiting in scope, the exemplary embodiments will be described with additional specificity and detail through the use of the accompanying drawings, in which:
Figures 1A and 1B are schematic diagrams illustrating different vibratory modes of a vibratory structure, according to one embodiment, which can be implemented in a Micro-Electro-Mechanical Systems (MEMS) sensor;
Figure 2A is a schematic plan view of a MEMS sensor, according to an exemplary embodiment;
Figure 2B is a schematic end view of the MEMS sensor of Figure 2A;
Figure 3 is a schematic perspective view of an inertial sensor, according to an exemplary embodiment;
Figure 4 is a schematic diagram illustrating vibratory modes of a vibratory structure, according to another embodiment, which can be implemented in a MEMS sensor; and
Figure 5 is a schematic plan view of a MEMS gyroscope, according to an exemplary embodiment.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

An in-plane non-degenerate Coriolis vibratory gyroscope is disclosed herein. In one embodiment, the in-plane gyroscope includes an outer proof mass located around a perimeter of a box-in-frame structure, and an inner proof mass surrounded by the outer proof mass. A first set of sense electrodes is located above each of the outer proof mass and the inner proof mass, and a second set of sense electrodes is located below each of the outer proof mass and the inner proof mass.

The orientation of the measurement axis relative to the plane of the proof masses in the gyroscope is such that the measurement axis is parallel to the plane of the proof masses. The sense electrodes above and below the proof masses measure the gap between the proof masses and the sense electrodes as the gap varies with motions of the proof masses to provide a pick-off mechanism. The present approach provides for measurement of the rotation axis in the plane of a circuit board where the in-plane gyroscope is mounted.

When two in-plane gyroscopes are combined with an out-of-plane gyroscope, an inertial sensor can be produced in which the three gyroscopes are mounted onto a flat circuit board, where all three orthogonal axes (x, y, z directions) can be measured. In prior approaches, three circuit boards each with a mounted gyroscope had to be positional orthogonal to each other in order to measure the three orthogonal axes. Such prior approaches are much more complex systems to assemble than that provided by the present approach.

Further details of various embodiments are described hereafter with reference to the drawings.

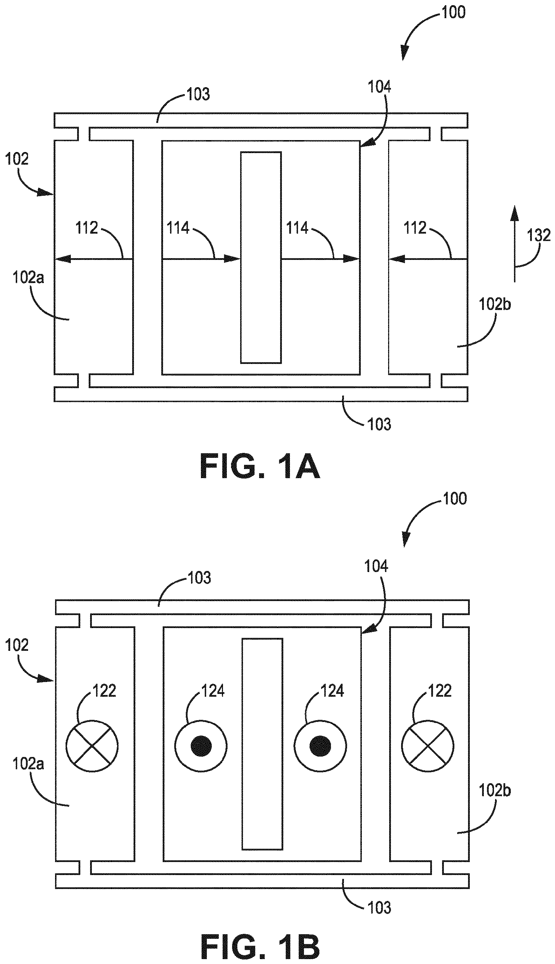

Figures 1A and 1B illustrate different vibratory modes for an in-plane, box-in-frame vibratory structure 100, according to one embodiment. The vibratory structure 100 can be implemented in a Micro-Electro-Mechanical Systems (MEMS) sensor such as a MEMS gyroscope device. As shown, vibratory structure 100 has an outer proof mass 102 and an inner proof mass 104. The outer proof mass 102 includes a first proof mass portion 102a and a second proof mass portion 102b. The inner proof mass 104 is interposed between first proof mass portion 102a and second proof mass portion 102b. The first and second proof mass portions 102a, 102b are directly connected to each other by connecting members 103, such as rigid trusses or other rigid structures.

The proof masses 102 and 104 vibrate with zero angular momentum and vibrate in opposite directions along different axes. For instance, when vibratory structure 100 experiences motion along a sense axis, the proof masses 102 and 104 vibrate with zero angular momentum.

As shown in Figure 1A, when the outer proof mass 102 experiences motion in one direction 112 along a motor axis, the inner proof mass 104 experiences motion in the opposite direction 114 along the motor axis. As illustrated in Figure 1B, when outer proof mass 102 experiences an out-of-plane motion in one direction 122, inner proof mass 104 experiences the out-of-plane motion in an opposite direction 124.

As understood by those skilled in the art, the device has three axes (driven/motor, sense, measurement/input) that are all orthogonal to each other. This is because the Coriolis force is a cross-product that follows the so called "right hand rule."

The device senses rotation about a direction 132 since the Coriolis effect generates a force on outer proof mass 102 in the direction 122 that is proportional to the velocity in the direction 112. Likewise, the Coriolis force is applied to inner proof mass 104 in the direction 124 proportional to the velocity in the direction 114. The difference in the motions along the directions 122 and 124 is therefore a measure of rotation. However, if the combined motion of outer proof mass 102 in the direction 122 and inner proof mass 104 in the direction 124 is calculated, the total angular momentum is zero.

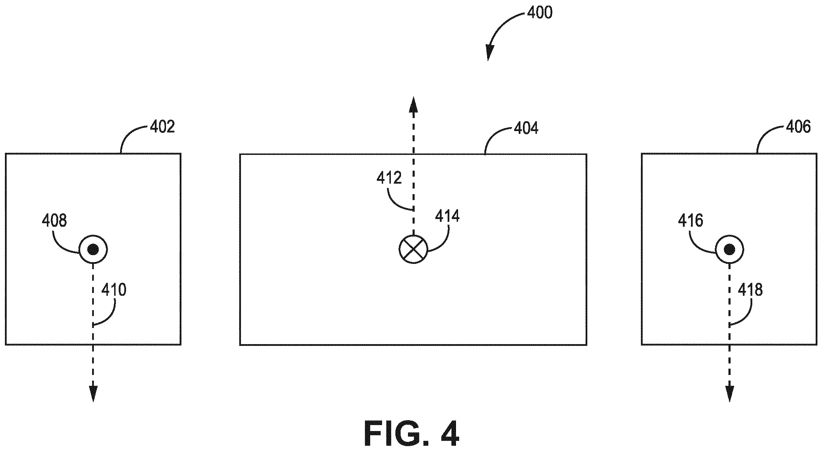

In another embodiment, a vibratory structure includes an outer proof mass and an inner proof mass, with the outer proof mass including a first proof mass portion and a second proof mass portion that are not directly connected to each other, such as by any rigid truss or other rigid structure, which results in three proof masses. Such an embodiment is described below with respect to Figure 4.

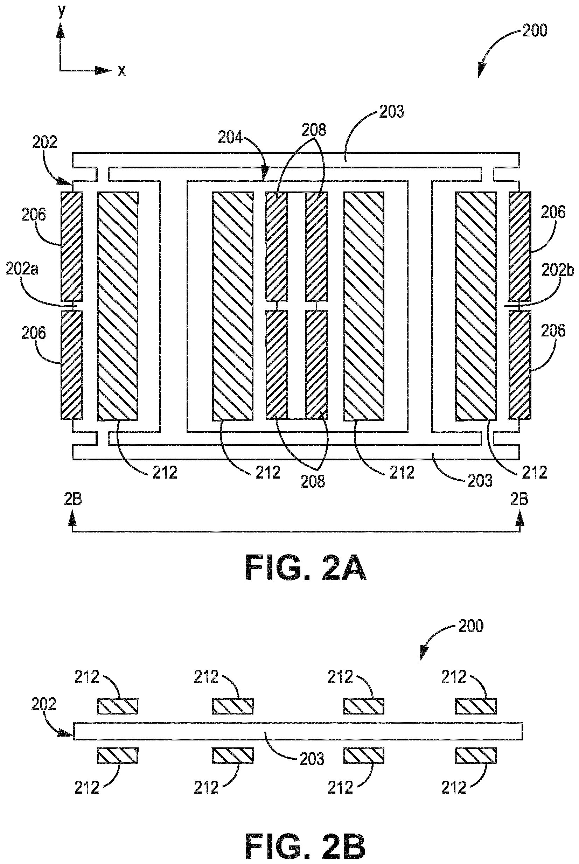

Figures 2A and 2B illustrate a MEMS sensor 200 such as a MEMS gyroscope, according to an exemplary embodiment. The MEMS sensor 200 is an in-plane box-in-frame MEMS sensor having a pair of proof masses, including a first (outer) proof mass 202 and a second (inner) proof mass 204. The first proof mass 202 includes a first proof mass portion 202a and a second proof mass portion 202b. The inner proof mass 204 is interposed between first proof mass portion 202a and second proof mass portion 202b. The first and second proof mass portions 202a, 202b are directly connected to each other by connecting members 203, such as rigid trusses or other rigid structures. The connecting members 203 are much stronger than flexures (not shown), which allow proof masses 202 and 204 to move together relative to a substrate such as a circuit board.

In certain implementations, the center of mass of proof mass 202 and the center of mass of proof mass 204 may be aligned with one another. When both proof mass 202 and proof mass 204 have center of masses that are aligned with one another, the proof masses may not be as susceptible to errors that may arise in a typical two proof mass sensor, where the two proof masses are on opposite sides of their combined center of mass of the MEMS sensor. In addition, the resonant frequencies of the motions of proof mass 202 and proof mass 204 along a drive axis are non-degenerate. The motions of proof masses 202 and 204 is such that the centers of mass for each proof mass move collinearly along a same axis.

The proof mass 202 and proof mass 204 may vibrate in such a way so that there is zero angular momentum in the sense axis. If vibratory motion occurs for a typical two proof mass sensor with masses on opposite sides of their combined center of mass, during the vibratory motion, one proof mass will move up while the other moves down. This response will be identical to the response of the proof masses to the Coriolis force and therefore the vibratory motion will result in sensor bias. The aligning of the centers of mass cause both proof masses to respond to vibratory rotation motion in a way that does not produce output bias and preserves zero angular momentum in the sense axis.

As the proof mass 204 responds to vibratory rotation motion, one side of proof mass 204 will move up while the other moves down. Since sensor output is only generated when both sides of proof mass 204 move in the same direction, the vibratory rotation effect will not generate bias. The proof mass 202 moves similarly to the proof mass 204, and thus also does not generate bias.

As illustrated in Figure 2A, the proof mass 202 and proof mass 204 have respective drive combs 206 and 208 positioned on the proof masses 202 and 204. The drive combs 206, 208 cause the different proof masses to oscillate along a drive axis in an anti-phase mode with each other. For example, if the proof masses 202 and 204 are driven along the x-axis, when the inner proof mass 204 moves towards the positive x direction, the outer proof mass 202 moves towards the negative x direction. Also, when the inner proof mass 204 moves towards the negative x direction, the outer proof mass 202 moves towards the positive x direction.

The drive combs 206, 208 may be implemented as capacitive plates, capacitive combs, piezo-suspensions, magnetic drives, or the like. In one or more implementations, one or both of proof mass 202 and proof mass 204 may include a first section and a second section that may be located on opposite sides of the center of mass, where the first and the second section are connected to one another through a first and second crossbar, where the first and second crossbars connect the first section to the second section such that the first and second crossbars are positioned symmetrically about the same center of mass.

The MEMS sensor 200 also includes sense electrodes that sense the movement of proof masses 202 and 204. The sense electrodes may sense the movement based on capacitance, magnetics, piezoresistivity, and the like. Accordingly, as proof masses 202 and 204 move in the sense direction due to the Coriolis force described above, the sense electrodes are able to sense the motion of proof masses 202 and 204 along the y direction.

In one embodiment, MEMS sensor 200 includes a first set of sense electrodes 212 that sense motion in they direction. As shown in Figure 2B, sense electrodes 212 are located above and below proof masses 202 and 204. In one implementation, sense electrodes 212 can be capacitive plates which measure changes in the gap between the electrodes and the proof masses.

Connections to the sense electrodes provide measurements of motion to a processing unit, which processes the measurements to calculate information that can be used for a navigation rate.

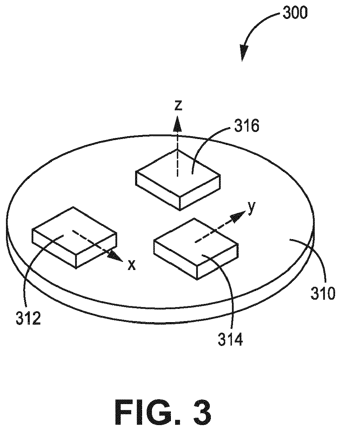

As mentioned previously, two in-plane gyroscopes, such as described herein, can be used in combination with an out-of-plane gyroscope to produce an inertial sensor, in which the three gyroscopes are mounted onto a flat circuit board. Figure 3 illustrates such an inertial sensor 300, according to one embodiment.

The inertial sensor 300 includes a planar circuit board 310, such as a printed circuit board (PCB), on which at least a first gyroscope 312, a second gyroscope 314, and a third gyroscope 316 are mounted. The gyroscopes 312 and 314 are in-plane gyroscopes, such as described previously herein, and gyroscope 316 is an out-of-plane gyroscope. This arrangement allows all three axes (x, y, z directions) to be measured. In one implementation, gyroscopes 312, 314, and 316 are MEMS gyroscopes.

The out-of-plane gyroscope includes similar components as described herein for the in-plane gyroscope, except that the out-of-plane gyroscope is configured such that the orientation of its measurement axis relative to a plane of the proof masses is perpendicular to the plane of the proof masses.

An exemplary out-of-plane gyroscope is described in U.S. Patent Application Publication No. 2018/0118557, entitled SYSTEMS AND METHODS FOR BIAS SUPPRESSION IN A NON-DEGENERATE MEMS SENSOR, the disclosure of which is incorporated by reference herein.

The first gyroscope 312 includes a first vibratory structure comprising a first set of proof masses. The gyroscope 312 is mounted on circuit board 310 such that an orientation of a measurement axis of gyroscope 312 relative to a plane of the first set of proof masses and circuit board 310 is such that the measurement axis is parallel to the plane of the first set of proof masses and circuit board 310 along a first (x) direction.

The second gyroscope 314 includes a second vibratory structure comprising a second set of proof masses. The gyroscope 314 is mounted on circuit board 310 such that an orientation of a measurement axis of gyroscope 314 relative to a plane of the second set of proof masses and circuit board 310 is such that the measurement axis is parallel to the plane of the second set of proof masses and circuit board 310 along a second (y) direction.

The third gyroscope 316 includes a third vibratory structure comprising a third set of proof masses. The gyroscope 316 is mounted on circuit board 310 such that an orientation of a measurement axis of gyroscope 316 relative to a plane of the third set of proof masses and circuit board 310 is such that the measurement axis is perpendicular to the to the plane of the third set of proof masses and the circuit board along a third (z) direction.

In one embodiment, the vibratory structure of third gyroscope 316 comprises a first proof mass and a second proof mass, with the first and second proof masses configured to be driven along a first axis. The first proof mass and second proof mass are also configured to move in an anti-phase mode in respective second axes. The first proof mass and the second proof mass are configured such that motions of the first and second proof masses along the respective second axes are such that an input-axis component of a total angular momentum in the motions along the second axes is approximately zero. A plurality of sense electrodes in gyroscope 316 are configured to sense the motions of the first proof mass and the second proof mass in the respective second axes.

The first gyroscope 312, the second gyroscope 314, and the third gyroscope 316 are operable to substantially reduce bias errors in inertial sensor 300, and to measure all possible rotations of inertial sensor 300.

In one embodiment, inertial sensor 300 is operative to measure rotation rates with respect to three orthogonal axes along the first, second, and third (x, y, z) directions. In this embodiment, the measurement axis of second gyroscope 314 along the second (y) direction is perpendicular to the measurement axis of first gyroscope 312 along the first (x) direction, and the measurement axis of third gyroscope 316 along the third (z) direction is perpendicular to the first and second (x, y) directions.

In an alternative embodiment, inertial sensor 300 has three measurement axes that are not fully orthogonal with respect to each other. For example, the gyroscopes can be arranged to have pair-wise orientation angles of 60 degrees instead of 90 degrees. This can be done, for example, to allow the errors in one gyroscope to be corrected by a second gyroscope that measures a vector component of the rotation rate measured by the first gyroscope.

In other embodiments, inertial sensor 300 can include more than three gyroscopes such that redundancy among the gyroscopes allows further cancellation of errors.

Figure 4 illustrates vibratory modes of a vibratory structure 400 having three proof masses, which can be implemented in a MEMS sensor such that the proof masses vibrate with substantially zero-angular momentum in the sense axis. For example, MEMS sensor 400 includes a first (outer) proof mass 402, a second (inner) proof mass 404, and a third (outer) proof mass 406. Unlike previous embodiments, the proof masses are not directly connected to each other, such as by any rigid truss or other rigid structure. The proof masses are connected to a substrate such as a circuit board by the use of flexures (not shown), which allow the proof masses to move relative to the substrate.

The first proof mass 402 and third proof mass 406 are of equal size, and second proof mass 404 is the same size as the combined sizes of first proof mass 402 and third proof mass 406. The first proof mass 402 is driven along a drive axis 408 and vibrates along a sense axis 410. The second proof mass 404 is driven along a drive axis 412 and vibrates along a sense axis 414. The third proof mass 406 is driven along a drive axis 416 and vibrates along a sense axis 418. The motion of second proof mass 404 is such that it balances the motion of first proof mass 402 and third proof mass 406 such that there is substantially zero angular momentum along the sense axes within MEMS sensor 400.

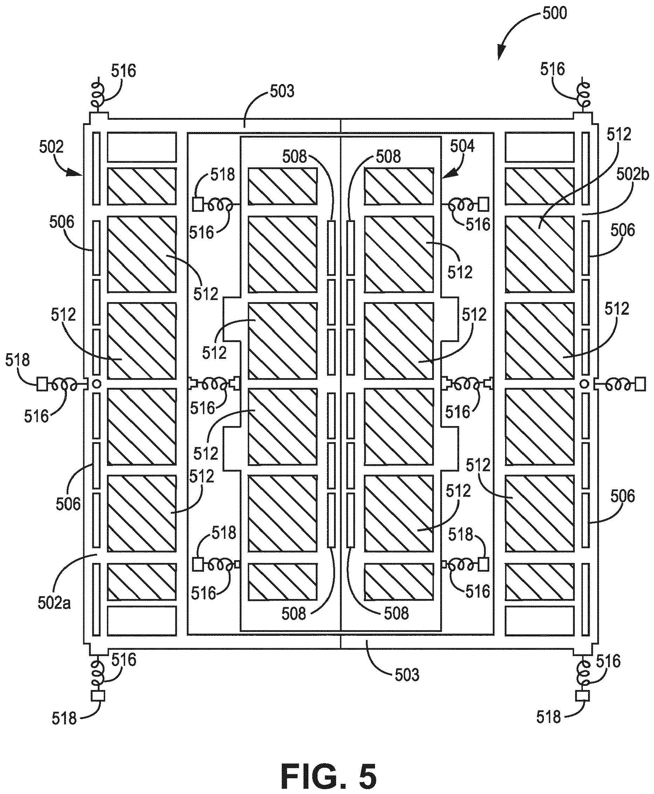

Figure 5 illustrates a MEMS gyroscope 500, according to one embodiment. The MEMs gyroscope 500 is an in-plane box-in-frame MEMS sensor having a pair of proof masses, including a first (outer) proof mass 502 and a second (inner) proof mass 504. The first proof mass 502 includes a first proof mass portion 502a and a second proof mass portion 502b. The inner proof mass 504 is interposed between first proof mass portion 502a and second proof mass portion 502b. The first and second proof mass portions 502a, 502b are directly connected to each other by connecting members 503, such as rigid trusses or other rigid structures.

The proof masses 502 and 504 have respective drive combs 506 and 508 positioned on proof masses 502 and 504. The drive combs 506 and 508 cause the different proof masses to vibrate along a drive axis in an anti-phase mode with each other. The MEMS gyroscope 500 also includes a set of sense electrodes 512, which are located above and below proof masses 502 and 504. In one implementation, sense electrodes 512 can be capacitive plates.

A plurality of flexures 516 and anchors 518 are used to mount outer proof mass 502 and inner proof mass 504 to a substrate such as a circuit board. Some of flexures 516 also connect proof mass 504 to proof mass 502, and some flexures 516 also connect the proof masses to anchors 518. The connecting members 503 are much stronger than flexures 516, which allow proof masses 502 and 504 to move together relative to the substrate.

The flexures may be spring type flexures or other type of flexures known to one skilled in the art. In at least one implementation, the flexures may be designed for zero net force on the anchors. Alternatively, the flexures may be designed for a non-zero net force on the anchors. Further, in certain implementations, directly coupling flexures between proof masses may provide sense mode separation from symmetric translation.

### Example Embodiments

Example 1 includes a gyroscope device, comprising an in-plane vibratory structure comprising: an outer proof mass including a first proof mass portion and a second proof mass portion; and an inner proof mass interposed between the first proof mass portion and the second proof mass portion; a first set of drive combs positioned on the outer proof mass; a second set of drive combs positioned on the inner proof mass; a first set of sense electrodes located above each of the outer proof mass and the inner proof mass; and a second set of sense electrodes located below each of the outer proof mass and the inner proof mass; wherein the first and second sets of drive combs are configured to cause the outer proof mass and the inner proof mass to vibrate along a drive axis in an anti-phase mode with respect each other; wherein the first and second sets of sense electrodes are configured to sense motions of the outer proof mass and the inner proof mass along a sense axis that is perpendicular to the drive axis; wherein orientation of a measurement axis relative to a plane of the outer and inner proof masses is such that the measurement axis is parallel to the plane of the outer and inner proof masses.
Example 2 includes the gyroscope device of Example 1, wherein the vibratory structure is a box-in-frame vibratory structure, with the first proof mass portion and the second proof mass portion of the outer proof mass directly connected to each other.
Example 3 includes the gyroscope device of Example 1, wherein the first proof mass portion and the second proof mass portion of the outer proof mass are not directly connected to each other.
Example 4 includes the gyroscope device of any of Examples 1-3, wherein the first and second sets of sense electrodes measure gaps between the proof masses and the sense electrodes as the gaps vary with motions of the proof masses.
Example 5 includes the gyroscope device of any of Examples 1-4, wherein the first and second sets of sense electrodes comprise capacitive plates.
Example 6 includes the gyroscope device of any of Examples 1-5, wherein the motions of the outer proof mass and the inner proof mass are such that a total angular momentum of the vibratory structure is zero.
Example 7 includes the gyroscope device of any of Examples 1-6, wherein resonant frequencies of the motions of the outer proof mass and the inner proof mass along the drive axis are non-degenerate.
Example 8 includes the gyroscope device of any of Examples 1-7, wherein the motions of the outer proof mass and the inner proof mass in the sense axis are determined to produce an output proportional to a measured quantity.
Example 9 includes the gyroscope device of Example 8, wherein the measured quantity is a measure of rotation rate.
Example 10 includes the gyroscope device of any of Examples 1-9, wherein the gyroscope is a Micro-Electro-Mechanical Systems (MEMS) gyroscope.
Example 11 includes the gyroscope device of any of Examples 1-10, further comprising a plurality of flexures and anchors configured to mount the outer proof mass and the inner proof mass to a substrate.
Example 12 includes the gyroscope device of Example 11, wherein some of the flexures connect the proof masses to the anchors.
Example 13 includes the gyroscope device of any of Examples 1-12, further comprising a plurality of flexures configured to connect the outer proof mass and the inner proof mass.
Example 14 includes the gyroscope device of any of Examples 1-13, wherein a motion of the proof masses is such that the centers of mass for each proof mass move collinearly along a same axis.
Example 15 includes a sensor device, comprising: a planar circuit board; a first gyroscope and a second gyroscope mounted on the planar circuit board, the first gyroscope and the second gyroscope each comprising: a vibratory structure comprising: an outer proof mass including a first proof mass portion and a second proof mass portion; and an inner proof mass interposed between the first proof mass portion and the second proof mass portion; a first set of drive combs positioned on the outer proof mass; a second set of drive combs positioned on the inner proof mass; a first set of sense electrodes located above each of the outer proof mass and the inner proof mass; and a second set of sense electrodes located below each of the outer proof mass and the inner proof mass; wherein the first and second sets of drive combs are configured to cause the outer proof mass and the inner proof mass to vibrate along a first drive axis in an anti-phase mode with respect each other; wherein the first and second sets of sense electrodes are configured to sense motions of the outer proof mass and the inner proof mass along a first sense axis that is perpendicular to the first drive axis; wherein orientation of a measurement axis of the first gyroscope, relative to a plane of the circuit board, is such that the measurement axis of the first gyroscope is parallel to the plane of the circuit board long a first direction; wherein orientation of a measurement axis of the second gyroscope, relative to a plane of the circuit board, is such that the measurement axis is parallel to the plane of the circuit board along a second direction that is different from the first direction; and a third gyroscope mounted on the planar circuit board, the third gyroscope comprising: a vibratory structure comprising a first proof mass, and a second proof mass, wherein the first proof mass and the second proof mass are configured to be driven along a first axis; wherein the first proof mass and second proof mass are configured to move in an anti-phase mode in respective second axes; wherein the first proof mass and the second proof mass are configured such that motions of the first proof mass and the second proof mass along the respective second axes are such that an input-axis component of a total angular momentum in the motions along the second axes is approximately zero; and a plurality of sense electrodes configured to sense the motions of the first proof mass and the second proof mass in the respective second axes; wherein orientation of a measurement axis of the third gyroscope relative to a plane of the circuit board is such that the measurement axis of the third gyroscope is perpendicular to the plane of the circuit board along a third direction that is different from the first and second directions; wherein the first gyroscope, the second gyroscope, and the third gyroscope are operable to substantially reduce bias errors in the sensor device, and to measure all possible rotations of the sensor device.
Example 16 includes the sensor device of Example 15, wherein the sensor device is operative to measure rotation rates with respect to three orthogonal axes along the first, second, and third directions.
Example 17 includes the sensor device of Example 16, wherein the measurement axis of the second gyroscope along the second direction is perpendicular to the measurement axis of the first gyroscope along the first direction; and the measurement axis of the third gyroscope along the third direction is perpendicular to the first and second directions.
Example 18 includes the sensor device of Example 15, wherein the sensor device is operative to measure rotation rates with respect to three axes along the first, second, and third directions that are not fully orthogonal with respect to each other.
Example 19 includes the sensor device of any of Examples 15-18, further comprising one or more additional gyroscopes mounted on the planar circuit board.
Example 20 includes the sensor device of any of Examples 15-19, wherein the first, second and third gyroscopes are MEMS gyroscopes.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A gyroscope device, comprising:
an in-plane vibratory structure comprising:
an outer proof mass including a first proof mass portion and a second proof mass portion; and
an inner proof mass interposed between the first proof mass portion and the second proof mass portion;
a first set of drive combs positioned on the outer proof mass;
a second set of drive combs positioned on the inner proof mass;
a first set of sense electrodes located above each of the outer proof mass and the inner proof mass; and
a second set of sense electrodes located below each of the outer proof mass and the inner proof mass;
wherein the first and second sets of drive combs are configured to cause the outer proof mass and the inner proof mass to vibrate along a drive axis in an anti-phase mode with respect each other;
wherein the first and second sets of sense electrodes are configured to sense motions of the outer proof mass and the inner proof mass along a sense axis that is perpendicular to the drive axis;
wherein orientation of a measurement axis relative to a plane of the outer and inner proof masses is such that the measurement axis is parallel to the plane of the outer and inner proof masses.

2. The gyroscope device of claim 1, wherein the vibratory structure is a box-in-frame vibratory structure, with the first proof mass portion and the second proof mass portion of the outer proof mass directly connected to each other.

3. The gyroscope device of claim 1, wherein the first proof mass portion and the second proof mass portion of the outer proof mass are not directly connected to each other.

4. The gyroscope device of claim 1, wherein the first and second sets of sense electrodes measure gaps between the proof masses and the sense electrodes as the gaps vary with motions of the proof masses.

5. The gyroscope device of claim 1, wherein:
the motions of the outer proof mass and the inner proof mass are such that a total angular momentum of the vibratory structure is zero; and
resonant frequencies of the motions of the outer proof mass and the inner proof mass along the drive axis are non-degenerate.

6. The gyroscope device of claim 1, wherein the gyroscope is a Micro-Electro-Mechanical Systems (MEMS) gyroscope.

7. A sensor device, comprising:
a planar circuit board;
a first gyroscope and a second gyroscope mounted on the planar circuit board, the first gyroscope and the second gyroscope each comprising:
a vibratory structure comprising:
an outer proof mass including a first proof mass portion and a second proof mass portion; and
an inner proof mass interposed between the first proof mass portion and the second proof mass portion;
a first set of drive combs positioned on the outer proof mass;
a second set of drive combs positioned on the inner proof mass;
a first set of sense electrodes located above each of the outer proof mass and the inner proof mass; and
a second set of sense electrodes located below each of the outer proof mass and the inner proof mass;
wherein the first and second sets of drive combs are configured to cause the outer proof mass and the inner proof mass to vibrate along a first drive axis in an anti-phase mode with respect each other;
wherein the first and second sets of sense electrodes are configured to sense motions of the outer proof mass and the inner proof mass along a first sense axis that is perpendicular to the first drive axis;
wherein orientation of a measurement axis of the first gyroscope, relative to a plane of the circuit board, is such that the measurement axis of the first gyroscope is parallel to the plane of the circuit board long a first direction;
wherein orientation of a measurement axis of the second gyroscope, relative to a plane of the circuit board, is such that the measurement axis is parallel to the plane of the circuit board along a second direction that is different from the first direction; and
a third gyroscope mounted on the planar circuit board, the third gyroscope comprising:
a vibratory structure comprising:
a first proof mass; and
a second proof mass, wherein the first proof mass and the second proof mass are configured to be driven along a first axis;
wherein the first proof mass and second proof mass are configured to move in an anti-phase mode in respective second axes;
wherein the first proof mass and the second proof mass are configured such that motions of the first proof mass and the second proof mass along the respective second axes are such that an input-axis component of a total angular momentum in the motions along the second axes is approximately zero; and
a plurality of sense electrodes configured to sense the motions of the first proof mass and the second proof mass in the respective second axes;
wherein orientation of a measurement axis of the third gyroscope relative to a plane of the circuit board is such that the measurement axis of the third gyroscope is perpendicular to the plane of the circuit board along a third direction that is different from the first and second directions;
wherein the first gyroscope, the second gyroscope, and the third gyroscope are operable to substantially reduce bias errors in the sensor device, and to measure all possible rotations of the sensor device.

8. The sensor device of claim 7, wherein the sensor device is operative to measure rotation rates with respect to three orthogonal axes along the first, second, and third directions.

9. The sensor device of claim 7, wherein the sensor device is operative to measure rotation rates with respect to three axes along the first, second, and third directions that are not fully orthogonal with respect to each other.

10. The sensor device of claim 7, further comprising one or more additional gyroscopes mounted on the planar circuit board.
